(19) **Europäisches Patentamt / European Patent Office / Office européen des brevets**

(11) **EP 2 450 637 B1**

(12) **EUROPEAN PATENT SPECIFICATION**

(45) Date of publication and mention of the grant of the patent:
**05.06.2019 Bulletin 2019/23**

(21) Application number: **11161480.6**

(22) Date of filing: **07.04.2011**

(51) Int Cl.:
*F24D 17/02* (2006.01)  *F24D 19/10* (2006.01)
*F24H 4/02* (2006.01)  *F25B 13/00* (2006.01)
*F25B 7/00* (2006.01)  *F24F 3/06* (2006.01)
*F24F 5/00* (2006.01)

(54) **Hot water supply apparatus for combined use of air conditioner**

Warmwasserzufuhrvorrichtung zur kombinierten Verwendung einer Klimaanlage

Appareil d'alimentation en eau chaude pour utilisation combinée de climatiseur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.11.2010 KR 20100110008**

(43) Date of publication of application:
**09.05.2012 Bulletin 2012/19**

(60) Divisional application:
**19167588.3**

(73) Proprietor: **LG Electronics Inc.**
**Youngdungpo-gu**
**Seoul 150-721 (KR)**

(72) Inventors:
• **Woo, Hyoungsuk**
**Gyeongnam 641-110 (KR)**
• **Ha, Jongchul**
**Gyeongnam 641-110 (KR)**

(74) Representative: **Vossius & Partner**
**Patentanwälte Rechtsanwälte mbB**
**Siebertstrasse 3**
**81675 München (DE)**

(56) References cited:
**EP-A1- 1 780 476  EP-A1- 2 131 122
EP-A1- 2 233 864  WO-A1-2009/107261
WO-A1-2010/098070  WO-A1-2010/113372
US-A1- 2004 144 528**

**Description**

BACKGROUND OF THE INVENTION

1. Technical Field

The present invention relates to a hot water supply apparatus for combined use of an air conditioner and the operation method therefor, more particularly, a hot water supply apparatus for combined use of an air conditioner having a cascade hot water heater and the operation method therefor.

2. Description of the Related Art

Generally, a hot water supply apparatus is an apparatus for generating hot water by heating water using heating equipment, such as a boiler or the like.

Recently, a heat pump type hot water supply apparatus for heating water using the cooling cycle of a compressor, a condenser, an expander and an evaporator, and an refrigeration and heat pump apparatus having a low-pressure side heating cycle and a high-pressure side heating cycle so as to heat water in a storage tank using different types of refrigerants have been developed.

In the refrigeration and heat pump apparatus according to the prior art, there is a problem in that, when not only the high-pressure side heating cycle but also an indoor unit for performing air conditioning on a room space are connected to the low-pressure side heating cycle, refrigerant is concentrated in the high-pressure side heating cycle, thereby degrading the air-conditioning performance of the indoor unit.

EP 2 233 864 A1 describes an air-conditioning and hot water complex system that can simultaneously treat a cooling load, a heating load and a high-temperature hot water supply load and supply a stable heat source throughout the year. This document discloses the features of the preambles of claims 1 and 8.

US 2004/0144528 A1 describes a flash water heater using a heat pump including a heat exchanger in which a refrigerant flow path exchanges heat with a water flow path.

SUMMARY OF THE INVENTION

The present invention has been made in an effort to solve the problems and it is an object of the present invention to provide a hot water supply apparatus for combined use of an air conditioner which allows refrigerant to be sufficiently supplied to the indoor unit when a cascade hot water heater, that is, a high-pressure side heating cycle is connected to an indoor unit to be operated simultaneously and the operation method therefore.

According to an aspect of the present invention, there is provided a hot water supply apparatus as defined in claim 1, for combined use of an air conditioner comprising: an outdoor unit having a compressor in which first refrigerant is compressed and an outdoor heat exchanger in which the first refrigerant is heat-exchanged with outdoor air; a plurality of indoor units connected to the outdoor unit and having an indoor heat exchanger in which the first refrigerant is heat-exchanged with indoor air; a cascade hot water heater connected to the plurality of indoor units in which the first refrigerant is heat-exchanged with second refrigerant, wherein the cascade hot water heater includes a capacity variable compressor which compresses the second refrigerant, a water refrigerant heat exchanger in which the second refrigerant compressed by the capacity variable compressor is condensed by heating water, an expander in which the second refrigerant condensed in the water refrigerant heat exchanger is expanded, and a cascade heat exchanger in which the second refrigerant expanded in the expander is heat-exchanged with the first refrigerant and then evaporated, and the cascade hot water heater modifies a flowing amount of the second refrigerant according to an outdoor temperature, an outlet water temperature of the water refrigerant heat exchanger and a working rate of the plurality of indoor units and the cascade hot water heater.

The cascade hot water heater modifies the flowing amount of the second refrigerant by adjusting a maximum input frequency to be input to the capacity variable compressor.

The capacity variable compressor may adjust the maximum input frequency to be lower when the outdoor temperature is lower.

The capacity variable compressor may adjust the maximum input frequency to be higher when the outlet water temperature is higher.

The capacity variable compressor may adjust the maximum input frequency to be higher when the working rate of the indoor units and the cascade hot water heater is lower.

The hot water supply apparatus for combined use of an air conditioner may further include an outdoor temperature sensor for detecting the outdoor temperature; an outlet water temperature sensor for detecting the outlet water temperature of the water refrigerant heat exchanger, and a controller for controlling the capacity variable compressor according to the working rate of the plurality of indoor units and the cascade hot water heater, the outdoor temperature detected by the outdoor temperature sensor and the outlet water temperature detected by the outlet water temperature sensor.

The plurality of indoor units and the cascade hot water heater may be connected to an outdoor unit through a liquid tube and a branch tube.

The plurality of indoor units and the cascade hot water heater are connected to an outdoor unit through a heat recovery unit.

According to another aspect of the present invention, there is provided a method as defined by claim 8, for operating the hot water supply apparatus for combined use of an air conditioner of claim 1, comprising: a temperature detection step for detecting the outlet water temperature of the water refrigerant heat exchanger and the outdoor temperature upon operation of the cascade hot water heater; and a flowing amount modification step for modifying the flowing amount of the second refrigerant according the working rate of the plurality of indoor units and the cascade hot water heater and the outdoor temperature and the outlet water temperature detected at the temperature detection step.

The flowing amount modification step includes a maximum input frequency setting step for setting the maximum input frequency to be input to the capacity variable compressor, and a capacity variable compressor frequency adjusting step for enabling the capacity variable compressor to be operated at less than the maximum input frequency.

The maximum input frequency is in proportion to a first reference value set according to a range of the outdoor temperature, a second reference value set according to a range of the outlet water temperature of the water refrigerant heat exchanger and a third reference value set according to the working rate of the plurality of indoor units and the cascade hot water heater.

The first reference value may be decreased when the outdoor temperature is lower.

The second reference value may be increased when the outlet water temperature of the water refrigerant heat exchanger is higher.

The third reference value may be increased when the working rate of the plurality of indoor units and the cascade hot water heater is lower.

The maximum input frequency may be a frequency resulting from multiplication of the maximum frequency of the capacity variable compressor and the first reference value, the second reference value and the third reference value.

BRIEF DESCRIPTION OF THE DRAWINGS

The above and other objects, features and advantages of the present invention will become apparent from the following description of preferred embodiments given in conjunction with the accompanying drawings, in which:

FIG. 1 is a diagram showing a schematic configuration of an embodiment of a hot water supply apparatus for combined use of an air conditioner according to the present invention;
FIG. 2 is a diagram showing a refrigerant flow and a water flow in the embodiment of a hot water supply apparatus for combined use of an air conditioner according to the present invention; and
FIG. 3 is a flowchart showing an embodiment of a method for operating the hot water supply apparatus for combined use of an air conditioner according to the present invention.

DESCRIPTION OF THE PREFERRED EMBODIMENTS

Exemplary embodiments of the present invention will now be described in detail with reference to the accompanying drawings.

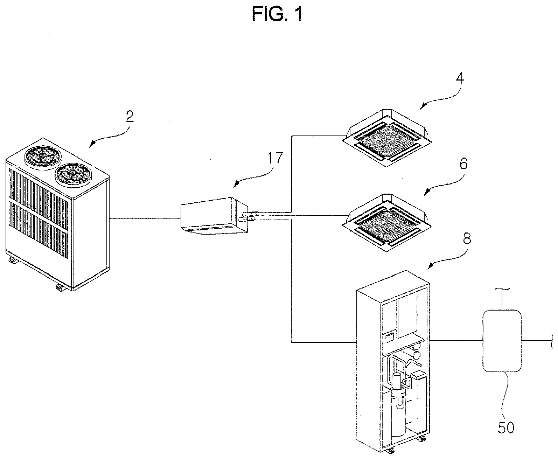

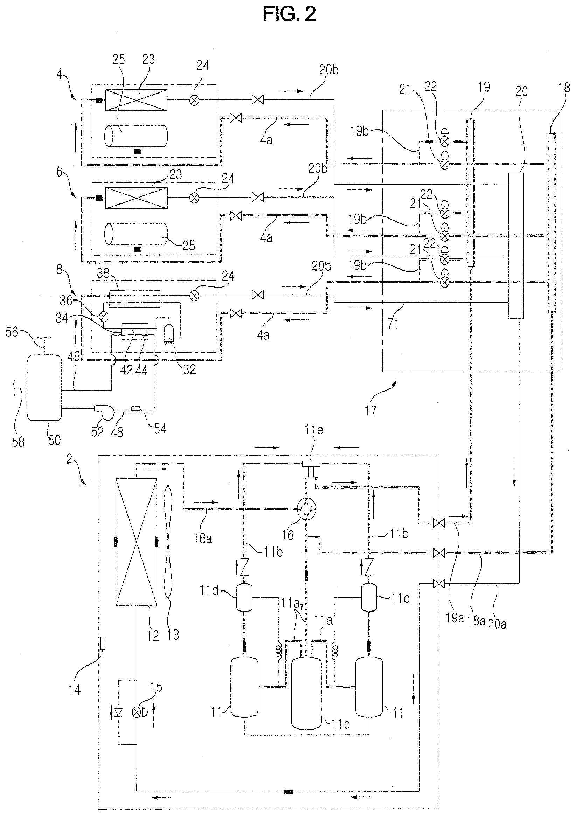

FIG. 1 is a diagram showing a schematic configuration of an embodiment of a hot water supply apparatus for combined use of an air conditioner according to the present invention, and FIG. 2 is a diagram showing a refrigerant flow and a water flow in the embodiment of a hot water supply apparatus for combined use of an air conditioner according to the present invention.

The hot water supply apparatus for combined use of an air conditioner according to this embodiment includes an outdoor unit 2, a plurality of indoor units 4 and 6 and a cascade hot water heater 8. Herein, the plurality of indoor units 4 and 6 air condition room spaces and the cascade hot water heater 8 generates hot water. The plurality of indoor units 4 and 6 and the cascade hot water heater 8 may be operated separately or simultaneously depending on indoor air conditioning load and hot water heating load. That is, the indoor units 4 and 6 may be operated regardless of the operation of the cascade hot water heater 8 or, the cascade hot water heater 8 may be operated simultaneously with all or some of the indoor units 4 and 6, or separately. If the plurality of indoor units 4 and 6 includes a first indoor unit 4 and a second indoor unit 6, the outdoor unit 2 is operated when there is any one of the air conditioning load of the first indoor unit 4, the air conditioning load of the second indoor unit 6 and the hot water heating load of the cascade hot water heater 8. In this case, when there is the air conditioning load of the first indoor unit 4, the first indoor unit 4 may be operated, when there is the air conditioning load of the second indoor unit 6, the second indoor unit 6 may be operated and when there is the hot water heating load, the cascade hot water heater 8 may be operated.

The outdoor unit 2 includes a compressor 11 in which first refrigerant is compressed and an outdoor heat exchanger 12 in which the first refrigerant is heat-exchanged with outdoor air. The compressor 11 may be coupled to a compressor suction passage 11a through which the first refrigerant is introduced into the compressor 11, and a compressor discharge passage 11b through which the first refrigerant compressed by the compressor 11 is discharged. An accumulator 11c in which liquid refrigerant is stored may be mounted in the compressor suction passage 11a. An oil separator 11d which separates oil from the refrigerant discharged from the compressor 11 and recovers the oil to the compressor 11 may be mounted in the compressor discharge passage 11b. The outdoor unit 2 may further include an outdoor fan 13 which blows outdoor air to the outdoor heat exchanger 12 and an outdoor temperature sensor 14 which detects an outdoor temperature. An outdoor expansion valve 15 which expands the first refrigerant blown toward the outdoor heat exchanger 12 may be mounted in the outdoor unit 2. The outdoor expansion valve 15 may be implemented using an electronic expansion valve, such as a LEV, an EEV, or the like, having an adjustable opening degree.

In the hot water supply apparatus for combined use of an air conditioner, the outdoor unit 2 and the plurality of indoor units 4 and 6 may be operated selectively for both heating and cooling. In the hot water supply apparatus for combined use of an air conditioner, a heating-cooling switch valve 16 which adjusts the flow of the refrigerant upon heating or cooling may be mounted in the outdoor unit 2. The heating-cooling switch valve 16 may be respectively coupled to the compressor suction passage 11a and the compressor discharge passage 11b. The heating-cooling switch valve 16 may be respectively coupled to the outdoor heat exchanger 12 and an outdoor heat exchanger connection passage 16a. A discharge distributor 11e may be mounted in the compressor discharge passage 11b. The discharge distributor 11e may distribute the refrigerant compressed by the compressor 11 to the heating-cooling switch valve 16 and a heat recovery unit 17 (HR unit) which will be described below.

The plurality of indoor units 4 and 6 and the cascade hot water heater 8 can be connected to the outdoor unit 2 through a liquid tube or a branch tube or can be connected to the outdoor unit 2 through the heat recovery unit 17.

When the plurality of indoor units 4 and 6 and the cascade hot water heater 8 can be connected to the outdoor unit 2 through a liquid tube or a branch tube, the refrigerant passages of the liquid tube may be arranged in parallel and the refrigerant passages of the branch tube may be arranged in parallel. The first refrigerant discharged from the outdoor unit 2 is distributed and supplied to the plurality of indoor units 4 and 6 and the cascade hot water heater 8 and the first refrigerant discharged from the plurality of indoor units 4 and 6 and the cascade hot water heater 8 may be collected and then supplied to the outdoor unit 2.

When the plurality of indoor units 4 and 6 and the cascade hot water heater 8 are connected to the outdoor unit 2 through the heat recovery unit 17, the first refrigerant discharged from the plurality of indoor units 4 and 6 and the first refrigerant discharged from the cascade hot water heater 8 may be supplied to the outdoor unit 2 through the heat recovery unit 17 (HR unit) and the first refrigerant discharged from the outdoor unit 2 may be supplied to the plurality of indoor units 4 and 6 and the cascade hot water heater 8 through the heat recovery unit 20.

The heat recovery unit 17 may include a low pressure gas pipe 18. The low pressure gas pipe 18 may be connected to the outdoor unit 2, more particular, to the compressor discharge passage 11a and the low pressure branch tube 18a. The low pressure gas pipe 18 may be connected to the plurality of outdoor units 4 and 6 respectively, and to the indoor branch tube 4a, 6a and 8a. The heat recovery unit 17 may include a high-pressure pipe 19. The high-pressure pipe 19 may be connected to the outdoor unit 2, more particular, to the discharge distributor 11e and the high-pressure branch tube 19a. The high-pressure gas pipe 19 may be connected to the indoor branch tubes 4a, 6a and 8a, and a branch tube 19b respectively. The heat recovery unit 17 may include a liquid pipe 20. The liquid pipe 20 may be connected to the outdoor unit 2 through a liquid tube 20a. The liquid pipe 20 may be connected to the indoor liquid tube 20b respectively connected to the plurality of outdoor units 4 and 6 and the cascade hot water heater 8. The heat recovery unit 17 may include a low-pressure valve 21 and a high-pressure valve 22. The low-pressure valve 21 is mounted in the indoor branch tubes 4a, 6a and 8a so as to control the flow of the refrigerant between the plurality of indoor units 4 and 6, the cascade hot water heater 8 and the low-pressure gas pipe 18, and is configured to have an adjustable opening degree. The high-pressure valve 22 is mounted in the branch tube 19b so as to control the flow of the refrigerant between the plurality of indoor units 4 and 6, the cascade hot water heater 8 and the high-pressure gas pipe 19, and is configured to have an adjustable opening degree. The heat recovery unit 17 allows the low-pressure valve 21 and the high-pressure valve 22 to be controlled depending on the operations of the plurality of indoor units 4 and 6 and the cascade hot water heater 8. When the plurality of indoor units 4 and 6 are used for cooling, the heat recovery unit 17 may supply low-temperature refrigerant to the plurality of indoor units 4 and 6, and when the plurality of indoor units 4 and 6 are used for heating, the heat recovery unit 17 may supply high-temperature refrigerant to the plurality of indoor units 4 and 6 and supply high-temperature refrigerant to the cascade hot water heater 8.

The plurality of indoor units 4 and 6 can perform air-conditioning on room spaces by allowing heat-exchange between the first refrigerant and indoor air to be performed. The plurality of indoor units 4 and 6 respectively has indoor heat-exchangers 23 in which the first refrigerant is heat-exchanged with indoor air. The plurality of indoor units 4 and 6 may have indoor expansion valves 24 respectively. The indoor expansion valve 24 can control the amount of the refrigerant flowing to the indoor heat-exchanger 23. The indoor expansion valve 24 may be implemented using an electronic expansion valve, such as a LEV, an EEV, or the like, having an adjustable opening degree. In the plurality of indoor units 4 and 6, when the opening degrees of the indoor expansion valve 24 is controlled to have a high value, the amount of the refrigerant introduced into the indoor heat-exchanger 23 is increased, and when the opening degrees of the indoor expansion valve 24 is controlled to have a low value, the amount of the refrigerant introduced into the indoor heat-exchanger 23 is decreased. The plurality of indoor units 4 and 6 may further respectively include indoor fans 25 which flow indoor air to the indoor heat-exchanger 23.

The cascade hot water heater 8 may be connected to be operated simultaneously with the plurality of indoor units 4 and 6. The first refrigerant is heat-exchanged with second refrigerant and the second refrigerant can heat water. The cascade hot water heater 8 may include a capacity variable compressor 32 which compresses the second refrigerant, a water refrigerant heat exchanger 34 in which the second refrigerant compressed by the capacity variable compressor 32 is condensed by heating water, an expander 36 in which the second refrigerant condensed in the water refrigerant heat exchanger 34 is expanded, and a cascade heat exchanger 38 in which the second refrigerant expanded in the expander 36 is heat-exchanged with the first refrigerant and then evaporated.

The capacity variable compressor 32 may be composed of an inverter compressor, of which working capacity varies depending on an input frequency, or the like. The flowing amount of the second refrigerant that is circulated through the capacity variable compressor 32, the water refrigerant heat exchanger 34, the expander 36 and cascade heat exchanger 38 may vary.

The water refrigerant heat exchanger 34 may include a condensing passage 42 through which the second refrigerant is condensed by passing and a water passage 44 through which water is heated by passing. The water refrigerant heat exchanger 34 may be configured by a plate shaped heat exchanger in which the condensing passage 42 and water passage 44 are arranged alternately with a heat transfer member interposed therebetween. The water refrigerant heat exchanger 34 may be configured by a double tube heat exchanger having a double tube structure in which any one of the condensing passage 42 and water passage 44 surrounds the other. The water refrigerant heat exchanger 34 may be configured by a shell-tube heat exchanger having a shell through which any one of the second refrigerant and the water passes, and a plurality of tubes through which the other of the second refrigerant and the water passes and which is located inside the shell. The water refrigerant heat exchanger 34 may be connected to a water inlet passage 46 through which water is introduced into the water passage 44 of the water refrigerant heat exchanger 34 and a water outlet passage 48 through which water is discharged from the water passage 44 of the water refrigerant heat exchanger 34.

The hot water supply apparatus for combined use of an air conditioner may further include a hot water tank 50 in which water is stored. The hot water tank 50 and the water refrigerant heat exchanger 34 may be connected to the water inlet passage 46 and the water outlet passage 48. A water pump 52 may be mounted in one of the water inlet passage 46 and the water outlet passage 48. The water pump 52 may supply the water of the hot water tank 50 to the water passage 44 of the water refrigerant heat exchanger 34 and then recover water to the hot water tank 50. An outlet water temperature sensor 54 which detects the temperature of water discharged from the water refrigerant heat exchanger 46 may be mounted in the water outlet passage 48. The hot water tank 50 may be connected to a water inlet 56 and a water outlet 58. Water fed from an external water source may be introduced into the hot water tank 50 through the water inlet 56. The water within the hot water tank 50 may be discharged to the locations where hot water is required, for example, a hot water supply unit, such as a shower, a bottom heating tube mounted in the bottom of a room or the like, through the water outlet 58.

The expander 36 may be implemented using an electronic expansion valve, such as a LEV, an EEV, or the like, having an adjustable opening degree.

The cascade heat exchanger 38 allows the first refrigerant to be condensed and the second refrigerant to be evaporated by allowing the heat of the first refrigerant to be transferred to the second refrigerant. The cascade heat exchanger 38 may include a first refrigerant passage through which the first refrigerant passes and a second refrigerant passage through which the second refrigerant passes. The cascade heat exchanger 38 may be configured by a plate shaped heat exchanger, a double tube heat exchanger or a shell-tube heat exchanger.

The cascade hot water heater 8 may further include an expansion valve 40 capable of controlling the amount of the first refrigerant flowing to the cascade heat exchanger 38.

The cascade hot water heater 8 allows the flowing amount of the second refrigerant flowing to the water refrigerant heat exchanger 34 to be decreased when the frequency input to the capacity variable compressor 32 is lowered, thereby decreasing the flowing amount of the first refrigerant flowing to the cascade hot water heater 8. The cascade hot water heater 8 allows the flowing amount of the second refrigerant to be increased when the frequency input to the capacity variable compressor 32 is increased, thereby increasing the flowing amount of the first refrigerant flowing to the cascade hot water heater 8. That is, the cascade hot water heater 8 can control the heating ability of the plurality of indoor units 4 and 6 and the water heating ability of the cascade hot water heater 8 according to a frequency input to the capacity variable compressor 32. In the case where an outdoor temperature is low and then the heating ability of the plurality of indoor units 4 and 6 is degraded, if the frequency of the capacity variable compressor 32 is increased, a subcooling degree having a cascade cycle which is formed by the capacity variable compressor 32, the water refrigerant heat exchanger 34, the expander 36 and cascade heat exchanger 38 may be decreased. In the case where the outdoor temperature is low and then the heating ability of the plurality of indoor units 4 and 6 is degraded, if the opening degree of the cascade expansion valve 40 is lowered to be identical to a setting opening degree, the flowing amount of the first refrigerant introduced into the cascade heat exchanger 38 is decreased, whereas the flowing amount of the first refrigerant introduced into the indoor units 4 and 6 is increased thereby improving heating ability.

When the cascade hot water heater 8 among the plurality of indoor units 4 and 6 and the cascade hot water heater 8 is connected to an end branch having the longest flow distance, the flowing amount of the first refrigerant flowing to the cascade hot water heater 8 may be small due to the flow distance of the refrigerant. In this case, when the frequency of the capacity variable compressor 32 is lowered, the subcooling degree having the cascade cycle which is formed by the capacity variable compressor 32, the water refrigerant heat exchanger 34, the expander 36 and cascade heat exchanger 38 may be increased, and when the opening degree of the cascade expansion valve 40 is increased to be identical to a setting opening degree, the flowing amount of the first refrigerant introduced into the cascade heat exchanger 38 may be decreased, thereby minimizing phenomenon in which the lack of the first refrigerant occurs due to the connection of the cascade hot water heater 8 to the end branch.

Meanwhile, the capacity variable compressor 32 may have the maximum frequency (Hz max) of input current. The capacity variable compressor 32 may adjust the current to be input to the capacity variable compressor 32 to be identical to a setting frequency (Hz max, hereinafter referred to as a maximum input frequency) that is lower than the maximum frequency when a condition in which there is lack of the first refrigerant flowing to the plurality of indoor units 4 and 6, or the like is present. When the maximum frequency (Hz max) is adjusted to be the maximum input frequency, the capacity variable compressor 32 may be operated at less than its working capacity corresponding to the maximum input frequency (Hz max'). In this case, the flowing amount of the second refrigerant circulating the cascade hot water heater 8 is smaller than that of the case in which the capacity variable compressor 32 may be operated at its working capacity corresponding to the maximum frequency (Hz max). That is, the maximum input frequency (Hz max') is lower than the maximum frequency (Hz max), and is a frequency modified or again set at the maximum frequency. For example, assuming that the maximum frequency (Hz max) of the capacity variable compressor 32 is 100 Hz, the maximum input frequency (Hz max') to be input to the capacity variable compressor 32 may be adjusted to be 70 Hz lower than the maximum frequency (Hz max), and the capacity variable compressor 32 allows the flowing amount of the second refrigerant to be decreased to a value lower than that of in the case in which the maximum frequency (Hz max) is input. In this case, the flowing amount of the first refrigerant flowing to the cascade hot water heater 8 is also decreased correspondingly and the first refrigerant, of which the amount is larger than that of the case in which the maximum frequency (Hz max) is input to the capacity variable compressor 32 may be allowed to flow to the plurality of indoor units 4 and 6.

The cascade hot water heater 8 may limit the maximum flowing amount of the second refrigerant so as to increase the flowing amount of the first refrigerant flowing to the plurality of indoor units 4 and 6. The cascade hot water heater 8 can control the maximum input frequency (Hz max') of the capacity variable compressor 32 in order to limit the maximum flowing amount of the second refrigerant.

The cascade hot water heater 8 may modify the flowing amount of the second refrigerant according to an outdoor temperature, the outlet water temperature of the water refrigerant heat exchanger 34 and the working rates of the plurality of indoor units 4 and 6 and the cascade hot water heater 8. In this case, the outdoor temperature is a temperature detected by the outdoor temperature sensor 14 and the outlet water temperature of the water refrigerant heat exchanger 34 is a temperature detected by the outlet water temperature sensor 54. Furthermore, the working rate of the plurality of indoor units 4 and 6 and the cascade hot water heater 8 may be calculated according to the operation and stop of the plurality of indoor units 4 and 6 and the cascade hot water heater 8. For example, when the plurality of indoor units may be composed of the first indoor unit 4 and the second indoor unit 6, the first indoor unit 4 may be 30% among an overall working rate, the second indoor unit 6 may be 30% among the overall working rate and the cascade hot water heater 8 may be 40% among the overall working rate. In this case, the working rate of the case in which the first and second indoor units 4 and 6 and the cascade hot water heater 8 are all operated is 100 % (overall operation). In this case, the working rate of the case in which one of the first and second indoor units 4 and 6 and the cascade hot water heater 8 are operated is 70%. The working rate of the case in which the cascade hot water heater 8 is only operated is 40%. The working rate may be various combinations according to the operation and stop of the plurality of indoor units 4 and 6 and the cascade hot water heater 8, the detailed description of which is omitted.

It is preferable that, when the outdoor temperature Tout is lower, the capacity variable compressor 32 is adjusted to have the lower maximum input frequency (Hz max').

It is preferable that, when the outlet water temperature Twt of the water refrigerant heat exchanger 34 is higher, the capacity variable compressor 32 is adjusted to have the higher maximum input frequency (Hz max').

It is preferable that, when the working rate of the indoor units 4 and 6 and the cascade hot water heater 8 is lower, the capacity variable compressor 32 is adjusted to have the higher maximum input frequency (Hz max').

The maximum input frequency (Hz max') may be determined depending on the maximum frequency (Hz max) of capacity variable compressor 32, a first reference value (Kodt) determined according to the range of the outdoor temperature, a second reference value (Kwt) determined according to the range of the outlet water temperature of the water refrigerant heat exchanger 34, and a third reference value (Kcapa) determined according to the working rate of the plurality of indoor units 4 and 6 and the cascade hot water heater 8.

The maximum input frequency (Hz max') may be defined as Formula 1.

[Formula 1]

$$Hz\ max' = Hz\ max \times Kodt \times Kwt \times Kcapa$$

Where, the first reference value Kodt may be set as defined in the following Table 1.

[Table 1]

| Outdoor Temperature (Tout) | Kodt |
|---|---|
| Outdoor Temperature >A**°C** | D |
| A**°C**$\geq$ Outdoor Temperature >B**°C** (B**°C**<A**°C**) | E (E<D) |
| B**°C**$\geq$ Outdoor Temperature >C**°C** (C**°C**<B**°C**) | F (F<E) |

Furthermore, the second reference value Kwt may be set as defined in the following Table 2.

[Table 2]

| Outlet water temperature (Twt) | Kwt |
|---|---|
| Outlet water temperature >G**°C** | L |
| G°**C**$\geq$ Outlet water temperature>H**°C** (H**°C**<G**°C**) | M(M<L) |
| H**°C**$\geq$ Outlet water temperature>I**°C** (I**°C**<H**°C**) | O(O<M) |
| I**°C**$\geq$ Outlet water temperature>J**°C** (J**°C**<I**°C**) | P(P<O) |
| J**°C**$\geq$ Outlet water temperature>K°C (K**°C**<J**°C**) | Q(Q<P) |

Furthermore, the third reference value Kcapa may be set as defined in the following Table 3.

[Table 3]

| Working Rate | more than 50%~ 100% | less than 50% |
|---|---|---|
| Kcapa | R | S(S>R) |

As described above, the first reference value Kodt may be respectively set for the respective temperature ranges of the outdoor temperature, and the second reference value Kwt may be respectively set for the respective temperature ranges of the outlet water temperature. Furthermore, the third reference value may be respectively set depending on the working rate of the plurality of outdoor units 4 and 6 and the cascade hot water heater 8 and the maximum input frequency (Hz max') may be determined by applying the first reference value Kodt, the second reference value Kwt and the third reference value Kcapa to Formula 1.

The frequency to be input to the capacity variable compressor 32 is modified according to the water heating load and the maximum input frequency thereof may be limited to the frequency determined by Formula 1. In this case, phenomenon in which the first refrigerant is concentrated in the cascade hot water heater 8 when the plurality of outdoor units 4 and 6 and the cascade hot water heater 8 are operated simultaneously can be minimized. Furthermore, the degrading of heating by the plurality of indoor units 4 and 5 which may occur when the first refrigerant is concentrated in the cascade hot water heater 8 may be minimized.

The hot water supply apparatus for combined use of an air conditioner may further include a controller for controlling the maximum input frequency of the capacity variable compressor 32 depending on the outdoor temperature detected by the outdoor temperature sensor 14, the water temperature detected by the outlet water temperature sensor 54, and the working rate of the plurality of indoor units 4 and 6 and the cascade hot water heater 8.

In the hot water supply apparatus for combined use of an air conditioner, when the cascade hot water heater 8 is operated, the outdoor temperature sensor 14 may detect the outdoor temperature and output it to the controller and the outlet water temperature sensor 54 may detect water temperature and output it to the controller. The controller may calculate the working rate of the plurality of indoor units 4 and 6 and the cascade hot water heater 8 according to whether the plurality of indoor units 4 and 6 are operated or stopped. The controller can adjust the maximum input frequency of the capacity variable compressor 32 using the calculated working rate, the outdoor temperature detected by the outdoor temperature sensor 14, and the water temperature detected by the outlet water temperature sensor 54.

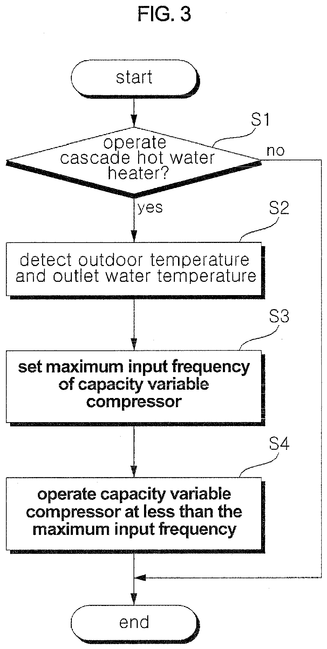

FIG. 3 is a flowchart showing an embodiment of a method for operating the hot water supply apparatus for combined use of an air conditioner according to the present invention.

The method of operating the hot water supply apparatus for combined use of an air conditioner according to this embodiment includes temperature detection steps S1 and S2.

The temperature detection steps S1 and S2 are performed when the cascade hot water heater 8 is operated due to water heating load, and detect the outdoor temperature and the outlet water temperature of the water refrigerant heat exchanger 34 upon the operation of the cascade hot water heater 8. Upon the operation of the cascade hot water heater 8, the capacity variable compressor 32 is operated and the compressor 11 of the outdoor unit 2 is operated. In this case, the plurality of indoor units 4 and 6 may be operated or stopped depending on air-conditioning load. The refrigerant compressed by the compressor 11 of the outdoor unit 2 may be supplied only to the cascade hot water heater 8 or may be distributed and supplied to any one of the cascade hot water heater 8 and the plurality of indoor units 4 and 6. In this case, the outdoor temperature sensor 14 detects the outdoor temperature and outputs it to the controller and the outlet water temperature sensor 54 detects water temperature and outputs it to the controller.

The method of operating the hot water supply apparatus for combined use of an air conditioner according to this embodiment includes flowing amount modification steps S3 and S4.

The flowing amount modification steps S3 and S4 may modify the flowing amount of the second refrigerant according to the working rate of the plurality of indoor units 4 and 6 and the cascade hot water heater 8, and the outdoor temperature detected in the temperature detection steps S1 and S2, and the outlet water temperature detected in the temperature detection steps S1 and S2. The flowing amount modification steps S3 and S4 may include a maximum input frequency setting step S3 and a capacity variable compressor frequency adjusting step S4 to modify the flowing amount of the second refrigerant. The maximum input frequency setting step S3 may set the maximum input frequency (Hz max') to be input to the capacity variable compressor 32 and the capacity variable compressor frequency adjusting step S4 enables the capacity variable compressor 32 to be operated at less than the maximum input frequency (Hz max'). The maximum input frequency (Hz max') may be determined in proportion to the first reference value set according to the range of the outdoor temperature, the second reference value set according to the range of the outlet water temperature of the water refrigerant heat exchanger and the third reference value set according to the working rate of the plurality of indoor units and the cascade hot water heater. Herein, the first reference value is decreased when the outdoor temperature is lower as shown in Table 1, the second reference value is increased when the outlet water temperature of the water refrigerant heat exchanger is higher as shown in Table 2 and the third reference value is increased when the working rate of the working rate of the plurality of indoor units and the cascade hot water heater is lower as shown in Table 3. The maximum input frequency (Hz max') may be determined to be a frequency resulting from multiplication of the maximum frequency of the capacity variable compressor 32 and the first reference value, the second reference value and the third reference value. As described above, when the maximum input frequency (Hz max') has been determined, a frequency less than the maximum input frequency (Hz max') may be input to the capacity variable compressor 32.

As described above, when the maximum input frequency (Hz max') is set, the flowing amount of the first refrigerant flowing to the plurality of indoor units 4 and 6 among the first refrigerant is larger than that of the case in which the capacity variable compressor 32 is operated at a frequency higher than the maximum input frequency (Hz max'), and the degrading of heating by the plurality of indoor units 4 and 5 may be prevented.

The present invention has the following advantages.

First, refrigerant balance between the plurality of indoor units and the cascade hot water heater can be ensured and the degrading of the air-conditioning ability of the plurality of indoor units due to operation of the cascade hot water heater can be minimized.

Second, the flowing amount of refrigerant flowing to the cascade hot water heater or the indoor units can be controlled by simple control of modifying the maximum input frequency to be input to the cascade compressor.

Third, the outdoor temperature, the water refrigerant heat exchanger and the working rate of the cascade hot water heater and the plurality of indoor units are used, thereby adjusting the optimal amount of refrigerant for the cascade hot water heater and the plurality of indoor units.

The invention has been described with reference to particular embodiments. However, it will be readily apparent to those skilled in the art that it is possible to embody the invention in specific forms other than those of the embodiment described above. The described embodiments are merely illustrative and should not be considered restrictive in any way. The scope of the invention is given by the appended claims, rather than the preceding description, and all variations and equivalents which fall within the range of the claims are intended to be embraced therein.

**Claims**

1.  A hot water supply apparatus for combined use of an air conditioner comprising:

    an outdoor unit (2) having a compressor (11) in which first refrigerant is compressed and an outdoor heat exchanger (12) in which the first refrigerant is heat-exchanged with outdoor air;
    a plurality of indoor units (4 and 6) connected to the outdoor unit (2) and having an indoor heat exchanger (23) in which the first refrigerant is heat-exchanged with indoor air; and
    a cascade hot water heater (8) connected to the plurality of indoor units (4 and 6) in which the first refrigerant is heat-exchanged with second refrigerant,
    wherein the cascade hot water heater (8) includes a capacity variable compressor (32) which compresses the second refrigerant, a water refrigerant heat exchanger (34) in which the second refrigerant compressed by the capacity variable compressor (32) is condensed by heating water, an expander (36) in which the second refrigerant condensed in the water refrigerant heat exchanger (34) is expanded, and a cascade heat exchanger (38) in which the second refrigerant expanded in the expander (36) is heat-exchanged with the first refrigerant and then evaporated,
    wherein the cascade hot water heater (8) is configured such that it modifies a flowing amount of the second refrigerant according to an outdoor temperature, an outlet water temperature of the water refrigerant heat exchanger (34) and a working rate of the plurality of indoor units (4 and 6) and the cascade hot water heater (8),
    wherein the cascade hot water heater (8) is configured such that it modifies the flowing amount of the second refrigerant by adjusting a maximum input frequency to be input to the capacity variable compressor (32),**characterized in that**
    the maximum input frequency is in proportion to a first reference value set according to a range of the outdoor temperature, a second reference value set according to a range of the outlet water temperature of the water refrigerant heat exchanger and a third reference value set according to the working rate of the plurality of indoor units (4 and 6) and the cascade hot water heater (8).

2.  The hot water supply apparatus for combined use of an air conditioner of claim 1, wherein the capacity variable compressor (32) is configured such that it adjusts the maximum input frequency to be lower when the outdoor temperature is lower.

3.  The hot water supply apparatus for combined use of an air conditioner of claim 1, wherein the capacity variable compressor (32) is configured such that it adjusts the maximum input frequency to be higher when the outlet water temperature is higher.

4.  The hot water supply apparatus for combined use of an air conditioner of any of claims 1 to 3, wherein the capacity variable compressor (32) is configured such that it adjusts the maximum input frequency to be higher when the working rate of the indoor units (4 and 6) and the cascade hot water heater (8) is lower.

5.  The hot water supply apparatus for combined use of an air conditioner of any of claims 1 to 4, further comprising:

    an outdoor temperature sensor (14) for detecting the outdoor temperature;
    an outlet water temperature sensor (54) for detecting the outlet water temperature of the water refrigerant heat exchanger (34); and
    a controller for controlling the capacity variable compressor (32) according to the working rate of the plurality of indoor units (4 and 6) and the cascade hot water heater (8), the outdoor temperature detected by the outdoor temperature sensor (14) and the outlet water temperature detected by the outlet water temperature sensor (54).

6.  The hot water supply apparatus for combined use of an air conditioner of any of claims 1 to 5, wherein the plurality of indoor units (4 and 6) and the cascade hot water heater (8) are connected to the outdoor unit (2) through a liquid tube and a branch tube.

7. The hot water supply apparatus for combined use of an air conditioner of any of claims 1 to 6, wherein the plurality of indoor units (4 and 6) and the cascade hot water heater (8) are connected to the outdoor unit (2) through a heat recovery unit (17).

8. A method for operating the hot water supply apparatus for combined use of an air conditioner of any of claims 1 to 7, comprising
a temperature detection step S1 and S2 for detecting the outlet water temperature of the water refrigerant heat exchanger (34) and the outdoor temperature upon operation of the cascade hot water heater (8); and
a flowing amount modification steps S3 and S4 for modifying the flowing amount of the second refrigerant according the working rate of the plurality of indoor units (4 and 6) and the cascade hot water heater (8) and the outdoor temperature and the outlet water temperature detected at the temperature detection step,
wherein the flowing amount modification step S3 and S4 includes
a maximum input frequency setting step S3 for setting the maximum input frequency to be input to the capacity variable compressor (32), and
a capacity variable compressor frequency adjusting step S4 for enabling the capacity variable compressor (32) to be operated at less than the maximum input frequency,
**characterized in that** the maximum input frequency is in proportion to a first reference value set according to a range of the outdoor temperature, a second reference value set according to a range of the outlet water temperature of the water refrigerant heat exchanger and a third reference value set according to the working rate of the plurality of indoor units (4 and 6) and the cascade hot water heater (8).

9. The method of claim 8, wherein the first reference value is decreased when the outdoor temperature is lower.

10. The method of claim 8 or 9, wherein the second reference value is increased when the outlet water temperature of the water refrigerant heat exchanger (34) is higher.

11. The method of any of claims 8 to 10, wherein the third reference value is increased when the working rate of the plurality of indoor units (4 and 6) and the cascade hot water heater (8) is lower.

12. The method of claims 8 to 11, wherein the maximum input frequency is a frequency resulting from multiplication of the maximum frequency of the capacity variable compressor (32) and the first reference value, the second reference value and the third reference value.

**Patentansprüche**

1. Warmwasserzufuhrvorrichtung zur kombinierten Verwendung einer Klimaanlage, mit:

einer Außeneinheit (2) mit einem Kompressor (11), in dem ein erstes Kältemittel verdichtet wird, und mit einem Außenraum-Wärmetauscher (12), in dem ein Wärmeaustausch zwischen dem ersten Kältemittel und Außenluft stattfindet;
mehreren Inneneinheiten (4 und 6), die mit der Außeneinheit (2) verbunden sind und einen Innenraum-Wärmetauscher (23) aufweisen, in dem ein Wärmeaustausch zwischen dem ersten Kältemittel und Innenluft stattfindet; und
einem Kaskaden-Warmwassererhitzer (8), der mit den mehreren Inneneinheiten (4 und 6) verbunden ist und in dem ein Wärmeaustausch zwischen dem ersten Kältemittel und dem zweiten Kältemittel stattfindet,
wobei der Kaskaden-Warmwassererhitzer (8) einen Kompressor (32) mit variabler Kapazität, der das zweite Kältemittel verdichtet, einen Wasserkältemittel-Wärmetauscher (34), in dem das durch den Kompressor (32) mit variabler Kapazität verdichtete zweite Kältemittel durch Erwärmen von Wasser kondensiert, einen Expander (36), in dem das in dem Wasserkältemittel-Wärmetauscher (34) kondensierte zweite Kältemittel expandiert wird, und einen Kaskaden-Wärmetauscher (38) aufweist, in dem ein Wärmeaustausch zwischen dem im Expander (36) expandierten zweiten Kältemittel und dem ersten Kältemittel stattfindet und das zweite Kältemittel dann verdampft wird,
wobei der Kaskaden-Warmwassererhitzer (8) derart konfiguriert ist, dass er eine Strömungsmenge des zweiten Kältemittels gemäß einer Außentemperatur, einer Auslasswassertemperatur des Wasserkältemittel-Wärmetauschers (34) und einer Arbeitsleistung der mehreren Inneneinheiten (4 und 6) und des Kaskaden-Warmwasserhitzers (8) modifiziert,
wobei der Kaskaden-Warmwassererhitzer (8) derart konfiguriert ist, dass er die Strömungsmenge des zweiten Kältemittels durch Einstellen einer dem Kompressor (32) mit variabler Kapazität zuzuführenden maximalen Eingangsfrequenz modifiziert;
**dadurch gekennzeichnet, dass**
die maximale Eingangsfrequenz proportional zu einem ersten Referenzwert, der gemäß einem Außentemperaturbereich festgelegt ist, einem zweiten Referenzwert, der gemäß einem Auslasswassertemperaturbereich des Wasserkältemittel-Wärmetauschers festgelegt ist, und einem dritten Referenzwert ist, der gemäß der Arbeitsleistung der mehreren Inneneinheiten (4 und 6) und des Kaskaden-Warmwassererhitzers (8) festgelegt ist.

2. Warmwasserzufuhrvorrichtung zur kombinierten Verwendung einer Klimaanlage nach Anspruch 1, wobei der Kompressor (32) mit variabler Kapazität derart konfiguriert ist, dass er die maximale Eingangsfrequenz so einstellt, dass sie niedriger ist, wenn die Außentemperatur niedriger ist.

3. Warmwasserzufuhrvorrichtung zur kombinierten Verwendung einer Klimaanlage nach Anspruch 1, wobei der Kompressor (32) mit variabler Kapazität derart konfiguriert ist, dass er die maximale Eingangsfrequenz so einstellt, dass sie höher ist, wenn die Auslasswassertemperatur höher ist.

4. Warmwasserzufuhrvorrichtung zur kombinierten Verwendung einer Klimaanlage nach einem der Ansprüche 1 bis 3, wobei der Kompressor (32) mit variabler Kapazität derart konfiguriert ist, dass er die maximale Eingangsfrequenz so einstellt, dass sie höher ist, wenn die Arbeitsleistung der Inneneinheiten (4 und 6) und des Kaskaden-Warmwassererhitzers (8) niedriger ist.

5. Warmwasserzufuhrvorrichtung zur kombinierten Verwendung einer Klimaanlage nach einem der Ansprüche 1 bis 4, ferner mit:

   einem Außentemperatursensor (14) zum Erfassen der Außentemperatur;
   einem Auslasswassertemperatursensor (54) zum Erfassen der Auslasswassertemperatur des Wasserkältemittel-Wärmetauschers (34); und
   einer Steuereinheit zum Steuern des Kompressors (32) mit variabler Kapazität gemäß der Arbeitsleistung der mehreren Inneneinheiten (4 und 6) und des Kaskaden-Warmwassererhitzers (8), der durch den Außentemperatursensor (14) erfassten Außentemperatur und der durch den Auslasswassertemperatursensor (54) erfassten Auslasswassertemperatur.

6. Warmwasserzufuhrvorrichtung zur kombinierten Verwendung einer Klimaanlage nach einem der Ansprüche 1 bis 5, wobei die mehreren Inneneinheiten (4 und 6) und der Kaskaden-Warmwassererhitzer (8) über ein Flüssigkeitsrohr und ein Zweigrohr mit der Außeneinheit (2) verbunden sind.

7. Warmwasserzufuhrvorrichtung zur kombinierten Verwendung einer Klimaanlage nach einem der Ansprüche 1 bis 6, wobei die mehreren Inneneinheiten (4 und 6) und der Kaskaden-Warmwassererhitzer (8) über eine Wärmerückgewinnungseinheit (17) mit der Außeneinheit (2) verbunden sind.

8. Verfahren zum Betreiben der Warmwasserzufuhrvorrichtung zur kombinierten Verwendung einer Klimaanlage nach einem der Ansprüche 1 bis 7, mit:

   einem Temperaturerfassungsschritt S1 und S2 zum Erfassen der Auslasswassertemperatur des Wasserkältemittel-Wärmetauschers (34) und der Außentemperatur beim Betrieb des Kaskaden-Warmwassererhitzers (8); und
   Strömungsmengenmodifizierungsschritten S3 und S4 zum Ändern der Strömungsmenge des zweiten Kältemittels gemäß der Arbeitsleistung der mehreren Inneneinheiten (4 und 6) und des Kaskaden-Warmwassererhitzers (8) und der Außentemperatur und der Auslasswassertemperatur, die im Temperaturerfassungsschritt erfasst wurden,
   wobei der Strömungsmengenmodifizierungsschritt S3 und S4 aufweist:

   einen Schritt S3 zum Einstellen der maximalen Eingangsfrequenz, die dem Kompressor (32) mit variabler Kapazität zugeführt werden soll; und
   einen Schritt S4 zum Einstellen der Frequenz des Kompressors mit variabler Kapazität, um zu ermöglichen, dass der Kompressor (32) mit variabler Kapazität bei weniger als der maximalen Eingangsfrequenz betrieben wird,
   **dadurch gekennzeichnet, dass**

die maximale Eingangsfrequenz proportional zu einem ersten Referenzwert, der gemäß einem Außentemperaturbereich festgelegt ist, einem zweiten Referenzwert, der gemäß einem Auslasswassertemperaturbereich des Wasserkältemittel-Wärmetauschers festgelegt ist, und einem dritten Referenzwert ist, der gemäß der Arbeitsleistung der mehreren Inneneinheiten (4 und 6) und des Kaskaden-Warmwassererhitzers (8) festgelegt ist.

9. Verfahren nach Anspruch 8, wobei der erste Referenzwert vermindert wird, wenn die Außentemperatur niedriger ist.

10. Verfahren nach Anspruch 8 oder 9, wobei der zweite Referenzwert erhöht wird, wenn die Auslasswassertemperatur des Wasserkältemittel-Wärmetauschers (34) höher ist.

11. Verfahren nach einem der Ansprüche 8 bis 10, wobei der dritte Referenzwert erhöht wird, wenn die Arbeitsleistung der mehreren Inneneinheiten (4 und 6) und des Kaskaden-Warmwassererhitzers (8) niedriger ist.

12. Verfahren nach einem der Ansprüche 8 bis 11, wobei die maximale Eingangsfrequenz eine Frequenz ist, die durch Multiplizieren der maximalen Frequenz des Kompressors (32) mit variabler Kapazität mit dem ersten Referenzwert, dem zweiten Referenzwert und dem dritten Referenzwert erhalten wird.

**Revendications**

1. Appareil d'alimentation en eau chaude pour une utilisation combinée d'un climatiseur comprenant :

une unité extérieure (2) comportant un compresseur (11) dans lequel un premier fluide frigorigène est comprimé et un échangeur de chaleur extérieur (12) dans lequel le premier fluide frigorigène subit un échange de chaleur avec l'air extérieur ;
une pluralité d'unités intérieures (4 et 6) reliées à l'unité extérieure (2) et comportant un échangeur de chaleur intérieur (23) dans lequel le premier fluide frigorigène subit un échange de chaleur avec l'air intérieur ; et
un élément chauffant d'eau chaude en cascade (8) relié à la pluralité d'unités intérieures (4 et 6) dans lequel le premier fluide frigorigène subit un échange de chaleur avec un second fluide frigorigène,
dans lequel l'élément chauffant d'eau chaude en cascade (8) inclut un compresseur à capacité variable (32) qui comprime le second fluide frigorigène, un échangeur de chaleur eau-fluide frigorigène (34) dans lequel le second fluide frigorigène comprimé par le compresseur à capacité variable (32) est condensé en chauffant l'eau, un détendeur (36) dans lequel le second fluide frigorigène condensé dans l'échangeur de chaleur eau-fluide frigorigène (34) est expansé, et un échangeur de chaleur en cascade (38) dans lequel le second fluide frigorigène expansé dans le détendeur (36) subit un échange de chaleur avec le premier fluide frigorigène puis est évaporé,
dans lequel l'élément chauffant d'eau chaude en cascade (8) est configuré de telle sorte qu'il modifie une quantité d'écoulement du second fluide frigorigène en fonction d'une température extérieure, d'une température d'eau de sortie de l'échangeur de chaleur eau-fluide frigorigène (34) et d'une fréquence de fonctionnement de la pluralité d'unités intérieures (4 et 6) et de l'élément chauffant d'eau chaude en cascade (8),
dans lequel l'élément chauffant d'eau chaude en cascade (8) est configuré de telle sorte qu'il modifie la quantité d'écoulement du second fluide frigorigène en ajustant une fréquence d'entrée maximale à entrer dans le compresseur à capacité variable (32), **caractérisé en ce que**
la fréquence d'entrée maximale est proportionnelle à une première valeur de référence réglée en fonction d'une plage de la température extérieure, à une deuxième valeur de référence réglée en fonction d'une plage de la température d'eau de sortie de l'échangeur de chaleur eau-fluide frigorigène et à une troisième valeur de référence réglée en fonction de la fréquence de fonctionnement de la pluralité d'unités intérieures (4 et 6) et de l'élément chauffant d'eau chaude en cascade (8).

2. Appareil d'alimentation en eau chaude pour une utilisation combinée d'un climatiseur selon la revendication 1, dans lequel le compresseur à capacité variable (32) est configuré de telle sorte qu'il ajuste la fréquence d'entrée maximale pour qu'elle soit plus basse quand la température extérieure est plus basse.

3. Appareil d'alimentation en eau chaude pour une utilisation combinée d'un climatiseur selon la revendication 1, dans lequel le compresseur à capacité variable (32) est configuré de telle sorte qu'il ajuste la fréquence d'entrée maximale pour qu'elle soit plus élevée quand la température d'eau de sortie est plus élevée.

**4.** Appareil d'alimentation en eau chaude pour une utilisation combinée d'un climatiseur selon l'une quelconque des revendications 1 à 3, dans lequel le compresseur à capacité variable (32) est configuré de telle sorte qu'il ajuste la fréquence d'entrée maximale pour qu'elle soit plus élevée quand la fréquence de fonctionnement des unités intérieures (4 et 6) et de l'élément chauffant d'eau chaude en cascade (8) est plus faible.

**5.** Appareil d'alimentation en eau chaude pour une utilisation combinée d'un climatiseur selon l'une quelconque des revendications 1 à 4, comprenant en outre :

un capteur de température extérieure (14) pour détecter la température extérieure ;
un capteur de température d'eau de sortie (54) pour détecter la température d'eau de sortie de l'échangeur de chaleur eau-fluide frigorigène (34) ; et
un dispositif de commande pour commander le compresseur à capacité variable (32) en fonction de la fréquence de fonctionnement de la pluralité d'unités intérieures (4 et 6) et de l'élément chauffant d'eau chaude en cascade (8), de la température extérieure détectée par le capteur de température extérieure (14) et de la température d'eau de sortie détectée par le capteur de température d'eau de sortie (54).

**6.** Appareil d'alimentation en eau chaude pour une utilisation combinée d'un climatiseur selon l'une quelconque des revendications 1 à 5, dans lequel la pluralité d'unités intérieures (4 et 6) et l'élément chauffant d'eau chaude en cascade (8) sont reliés à l'unité extérieure (2) par le biais d'un tube de liquide et d'un tube de dérivation.

**7.** Appareil d'alimentation en eau chaude pour une utilisation combinée d'un climatiseur selon l'une quelconque des revendications 1 à 6, dans lequel la pluralité d'unités intérieures (4 et 6) et l'élément chauffant d'eau chaude en cascade (8) sont reliés à l'unité extérieure (2) par le biais d'une unité de récupération de chaleur (17).

**8.** Procédé de fonctionnement de l'appareil d'alimentation en eau chaude pour une utilisation combinée d'un climatiseur selon l'une quelconque des revendications 1 à 7, comprenant

une étape de détection de température S1 et S2 pour détecter la température d'eau de sortie de l'échangeur de chaleur eau-fluide frigorigène (34) et la température extérieure lors du fonctionnement de l'élément chauffant d'eau chaude en cascade (8) ; et
une étapes de modification de quantité d'écoulement S3 et S4 pour modifier la quantité d'écoulement du second fluide frigorigène en fonction de la fréquence de fonctionnement de la pluralité d'unités intérieures (4 et 6) et de l'élément chauffant d'eau chaude en cascade (8) et de la température extérieure et de la température d'eau de sortie détectées à l'étape de détection de température,
dans lequel l'étape de modification de quantité d'écoulement S3 et S4 inclut
une étape de réglage de fréquence d'entrée maximale S3 pour régler la fréquence d'entrée maximale à entrer dans le compresseur à capacité variable (32), et
une étape d'ajustement de fréquence de compresseur à capacité variable S4 pour permettre au compresseur à capacité variable (32) de fonctionner à moins que la fréquence d'entrée maximale,
**caractérisé en ce que** la fréquence d'entrée maximale est proportionnelle à une première valeur de référence réglée en fonction d'une plage de la température extérieure, à une deuxième valeur de référence réglée en fonction d'une plage de la température d'eau de sortie de l'échangeur de chaleur eau-fluide frigorigène et à une troisième valeur de référence réglée en fonction de la fréquence de fonctionnement de la pluralité d'unités intérieures (4 et 6) et de l'élément chauffant d'eau chaude en cascade (8).

**9.** Procédé selon la revendication 8, dans lequel la première valeur de référence diminue quand la température extérieure est plus basse.

**10.** Procédé selon la revendication 8 ou 9, dans lequel la deuxième valeur de référence augmente quand la température d'eau de sortie de l'échangeur de chaleur eau-fluide frigorigène (34) est plus élevée.

**11.** Procédé selon l'une quelconque des revendications 8 à 10, dans lequel la troisième valeur de référence augmente quand la fréquence de fonctionnement de la pluralité d'unités intérieures (4 et 6) et de l'élément chauffant d'eau chaude en cascade (8) est plus faible.

**12.** Procédé selon les revendications 8 à 11, dans lequel la fréquence d'entrée maximale est une fréquence résultant de la multiplication de la fréquence maximale du compresseur à capacité variable (32) et de la première valeur de référence, de la deuxième valeur de référence et de la troisième valeur de référence.

EP 2 450 637 B1

FIG. 1

# FIG. 2

## FIG. 3

start

S1
operate
cascade hot water
heater?

no

yes

S2
detect outdoor temperature
and outlet water temperature

S3
set maximum input frequency
of capacity variable
compressor

S4
operate capacity variable
compressor at less than the
maximum input frequency

end

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2233864 A1
- US 20040144528 A1